# EUROPÄISCHE PATENTSCHRIFT

(11) **EP 1 458 547 B1**
(45) Veröffentlichungstag und Bekanntmachung des Hinweises auf die Patenterteilung: **12.03.2008**
(21) Anmeldenummer: 02787898.2
(22) Anmeldetag: 03.12.2002
(51) Int. Cl.: B29C 47/88, B29C 35/16

(54) **VERFAHREN UND VORRICHTUNG ZUM KÜHLEN VON PLATTEN- ODER BAHNFÖRMIGEN SUBSTRATEN MITTELS VARIABLER ABSORPTIONS- UND REFLEKTIONSPLATTEN**
METHOD AND DEVICE FOR COOLING SLAB- OR WEB-SHAPED SUBSTRATES BY MEANS OF VARIABLE ABSORBING AND REFLECTING PLATES
PROCEDE ET DISPOSITIF POUR REFROIDIR DES SUBSTRATS EN FORME DE PLAQUES OU DE BANDES AU MOYEN DE PLAQUES D'ABSORPTION ET DE REFLEXION VARIABLES

(30) Priorität: 13.12.2001 DE 10161168
(43) Veröffentlichungstag der Anmeldung: 22.09.2004
(73) Patentinhaber: KraussMaffei Technologies GmbH, 80997 München (DE)
(72) Erfinder: GRAJEWSKI, Franz, 86925 Fuchstal (DE); REIBER, Erwin, 85757 Karlsfeld (DE); STIEGLITZ, Henning, 80999 München (DE)
(74) Vertreter: Zollner, Richard
(86) Internationale Anmeldenummer: PCT/EP2002/013646
(87) Internationale Veröffentlichungsnummer: WO 2003/049920

(56) Entgegenhaltungen:
- EP-A- 0 352 241
- DE-A- 19 752 501
- DE-C- 19 900 357
- US-B1- 6 375 452

## Beschreibung

Die Erfindung betrifft ein Verfahren zum Steuern des Abkühlprozesses von platten- oder bahnförmigen Substraten, insbesondere von Kunststoffplatten oder -bahnen, wobei die Substrate entlang einer Kühlstrecke bewegt werden, sowie eine Vorrichtung zum Kühlen von ebensolchen Substraten, mit einer Fördereinrichtung auf der das Substrat während des Förderns abkühlen kann.

Zur Herstellung von Platten oder Bahnen aus Kunststoff wird die von einem Extruder zur Verfügung gestellte homogene Schmelze durch ein Breitschlitzwerkzeug zu einem breiten Schmelzestrang ausgeformt. Im Anschluß daran durchläuft die Schmelze ein Glättwerk.

Es sind Vorrichtungen bekannt, die die extrudierte Thermoplastbahn unter Einwirkung von Flächendruck bis zu einer Temperatur abkühlen, bei der das Glätten der Oberfläche beendet ist. Gemäß der DE 35 30 309 A1 übernimmt eine Doppelbandpresse sowohl das Kalibrieren und Glätten der Thermoplastbahn als auch das Abführen von Wärme. In der DE 198 45 652 A1 werden zwei paarweise gegenüberliegende und auf die Materialbahn einwirkende Baueinheiten beschrieben, die jeweils ein mit der Materialbahn in Kontakt befindliches antreibbares Metallband umfassen, das im Bereich der Auflage kühlbar ist. Mit diesen Metallbändern wird die Materialbahn transportiert, geglättet und gekühlt. Diese beiden Vorrichtungen führen sowohl das Glätten als auch das Kühlen der Kunststoffbahnen durch, was den technischen Aufwand für die Kühlvorrichtungen erhöht, da diese gleichzeitig auch als Kalibrier- und Glättvorrichtungen wirken müssen. Die Kühlvorrichtungen sind also nicht einfach für andere Platten- oder Bahndicken bzw. andere Materialien einsetzbar, sondern müssen an jedes verarbeitete Material und an jede Substratdicke individuell angepasst werden.

Aus der DE 197 52 501 C2 sind Kühlvorrichtungen zum Kühlen von Kunststoffplatten oder -bahnen bekannt, wobei die Platten oder Bahnen nach Verlassen des Walzenglättwerks über eine Rollenbahn laufen und Einrichtungen, die die Oberseite und die Unterseite der Platten oder Bahnen getrennt mit Luft kühlen vorgesehen sind. Diese Einrichtungen erstrecken sich über eine vorgegebene Länge einer Platte oder Bahn und sind gegenüber der Umgebung abgeschlossen. In jeder Einrichtung wird Luft mittels mehrerer über die Breite der Platten oder Bahnen verteilter Gebläse in eine Kreisbewegung gebracht, wobei in diesem Kreis ein Kühlaggregat vorgesehen ist. Die Installation einer solchen aktiven Kühlvorrichtung mit geschlossenen Kühlkreisen sowohl ober- als auch unterhalb der Rollenbahn ist technisch sehr aufwendig und beansprucht viel Raumhöhe.

Aus dem Stand der Technik sind weiterhin Anlagen für die Herstellung von Bahnen oder Platten aus Kunststoff bekannt (DE 197 52 501 C2, Spalte 1, Zeile 6 - 21), bei denen die extrudierten Kunststoffplatten oder -bahnen einem Walzenglättwerk zur Vergleichmäßigung der Dicke und Behandlung der Oberflächen zugeführt werden, wobei gleichzeitig zur Erzielung der gewünschten Eigenschaften eine gesteuerte Kühlung über den Kontakt mit den Glättwalzen erzielt werden soll. Die weitere Abkühlung auf ein Temperaturniveau, das eine anschließende Handhabung oder Bearbeitung zulässt, erfolgt auf einer Rollenbahn durch Kontakt mit der Umgebungsluft. Die Rollenbahnlänge ist entsprechend ausgelegt. Der Erhöhung der Leistung einer solchen Anlage sind Grenzen gesetzt, da die Rollenbahn nur eine endliche und möglichst geringe Länge haben soll, die meistens durch bauliche Gegebenheiten beschränkt wird.

Im Falle eines Walzenglättwerks wird die aus der Breitschlitzdüse austretende Schmelze in einem ersten Walzenspalt aufgenommen. Beim Durchlaufen des Glättwerks werden die Oberflächen der Folienbahn geglättet und durch exakte Parallelführung des ersten Walzenpaares auf große Dickengleichmäßigkeit gebracht. Das Walzenglättwerk beeinflusst die Halbzeugqualität nicht nur im ersten Walzenspalt, sondern auch bei den nachfolgenden Walzenumschlingungen. Dort werden in Abhängigkeit von der Walzentemperatur, der Kontaktdauer auf den Walzen, der Warenbahndicke und der Kunststoffart (amorph, teilkristallin) Orientierungen und Eigenspannungen in der Kunststoffbahn erzeugt, die für die geforderte Planlage der Tafel von Bedeutung sind.

Die zwangsläufig beim Abkühlen der Folie oder Tafel entstehenden unsymmetrischen Temperaturprofile erzeugen über der Halbzeugdicke aufgrund des zeitlich versetzten Einfrierens Dehnungsdifferenzen. Dadurch werden Eigenspannungen hervorgerufen. Durch Temperieren der Walzen wird versucht, das unsymmetrische Temperaturprofil beim Übergang vom schmelzflüssigen in den festen Zustand zu vergleichmäßigen. Bei den teilkristallinen Kunststoffen ist dieser Ausgleich schwerer herbeizuführen als bei den amorphen. Hier müssen die Walzen sehr stark gekühlt werden um ein Ankleben der Schmelze auf den Walzenoberflächen und die Transparenz beeinträchtigende Kristallisation zu verhindern. In diesem Fall kann der Eigenspannungsausgleich durch nachfolgendes Tempern verbessert werden. Hierbei kann es jedoch zu thermischer Nachkristallisation bei teilkristallinen Kunststoffen kommen, wodurch wiederum die optischen Eigenschaften verschlechtert werden.

Die Aufgabe der vorliegenden Erfindung ist es, ein Verfahren anzugeben, das es mit vergleichsweise geringem technischen Aufwand erlaubt, platten- oder bahnförmige Extrudate herzustellen, die weitgehend frei von Inhomogenitäten des Materials und Eigenspannungen sind. Des weiteren soll eine Vorrichtung zur Durchführung des Verfahrens angegeben werden.

Diese Aufgabe wird hinsichtlich des Verfahrens durch die Merkmale des Anspruchs 1 und hinsichtlich der Vorrichtung durch die Merkmale des nebengeordneten Anspruchs 4 gelöst.

Durch das erfindungsgemäße Verfahren bzw. die erfindungsgemäße Vorrichtung wird zur Beeinflussung des Abkühlungsprozesses die Eigenenthalpie der Substrate genutzt, wodurch der Einsatz externer Energiequellen reduziert werden kann. Durch Verzicht auf aktive Kühlmaßnahmen, wie sie aus dem Stand der Technik bekannt sind, kann die Aufgabe mit relativ geringem technischen Aufwand gelöst werden. Auf eine Reduzierung der Länge der Rollenkühlstrecke wird bewusst verzichtet, um einen gleichmäßigeren Abkühlprozess gewährleisten zu können.

Außerdem wird durch das erfindungsgemäße Verfahren bzw. die erfindungsgemäße Vorrichtung der zeitlichen Verlauf des Abkühlprozesses gezielt beeinflußt, so daß das Extrudat möglichst gleichmäßig abkühlt. Hierdurch können Inhomogenitäten im Material und dadurch hervorgerufene Verwerfungen der Platten oder Bahnen vermieden werden.

Die platten- oder bahnförmigen Substrate unterliegen während des Transportes über eine offene bzw. nicht abgeschirmte Kühlstrecke der freien Konvektion und Wärmeabstrahlung. Diese beiden Prozesse werden durch die Bedingungen in unmittelbarer Umgebung der Substrate wie Temperatur und Strömungsgeschwindigkeit des umgebenden Mediums - in der Regel Luft - stark beeinflusst. Durch gezielte Beeinflussung der Abstrahlung bzw. Reabsorption von Wärme läßt sich der Abkühlprozeß der Substrate steuern. Dies erfolgt durch die Anbringung von Abdeckelementen, die die Wärmestrahlung absorbieren und/oder reflektieren, oberhalb und/oder unterhalb der Substrate. Diese Abdeckelemente sollten senkrecht zur Förderrichtung mindestens die gesamte Breite der Kühlstrecke überdecken, um eventuelle Randeffekte zu vermeiden.

Bereits ein Befestigen von Abdeckelementen auf einer Seite der Kühlstrecke verändert das Abstrahlungsverhalten der Substrate stark. Ein gleichmäßigeres Abkühlverhalten und damit homogenere Substrate kann man durch Anbringen von Abdeckelementen auf beiden Seiten, sowohl ober- als auch unterhalb der Kühlstrecke erreichen.

Die Bereiche der Absorption und/oder der Reflexion können durch die Anordnung und/oder die Anzahl der Abdeckelemente, die ober- und/oder unterhalb der Kühlstrecke angebracht werden, beeinflusst werden. Durch die freie Wahl von Anzahl sowie Position der Abdeckelemente in Bezug auf die Gesamtlänge der Kühlstrecke, kann sehr flexibel auf die aktuellen Bedingungen wie z.B. Lufttemperatur und Substratoberflächentemperatur eingegangen werden.

Der Grad der Absorption und/oder der Reflexion durch die Abdeckelemente läßt sich durch Verändern des Abstands zwischen den Substraten und den Abdeckelementen variieren. Je kleiner der Abstand zwischen Substrat und Abdeckelement, desto langsamer kühlt das Substrat ab, und umso weniger Eigenspannungen können sich im Material aufbauen.

Ähnliche Effekte lassen sich auch durch Verändern der Ausdehnung der einzelnen Bereiche, in denen die Absorption und/oder die Reflexion gezielt beeinflußt werden, erreichen.

Noch einfacher können die Bereiche der gezielten Absorption und/oder der Reflexion den tatsächlichen Anforderungen angepasst werden, wenn in diesen Bereichen die Umgebungs- und/oder Substratoberflächentemperatur gemessen wird.

Vorteilhafterweise ist es vorgesehen, die Ausdehnung der Bereiche und/oder den Grad der Absorption und/oder der Reflexion nach Maßgabe der erfassten Temperaturwerte automatisch zu regeln.

Eine erfindungsgemäße Vorrichtung sieht oberhalb und/oder unterhalb einer Fördereinrichtung, entlang derer die Substrate gefördert werden, ein oder mehrere Abdeckelemente vor, um den Grad der Absorption und/oder der Reflexion der von den Substraten abgestrahlten Wärme in gewissen Bereichen flexibel an die Erfordernisse anpassen zu können. Die Bereiche der Absorption und/oder der Reflexion können hierbei durch die Anordnung und/oder die Anzahl der Abdeckelemente beeinflusst werden.

Hierbei ist der Abstand zwischen den Abdeckelementen und den Substraten auf der Fördereinrichtung vorteilhafterweise verstellbar.

Des weiteren sollten die Abdeckelemente entlang der Förderrichtung verschiebbar sein, um die optimale Position der Bereiche mit verstärkter Absorption und/oder Reflexion einfach einstellen zu können. Außerdem kann die Größe der Abdeckung und damit der Grad der Absorption und/oder der Reflexion durch Hinzufügen oder Entfernen von Abdeckelementen eingestellt werden.

Vorzugsweise verfügen ein oder mehrere Abdeckelemente jeweils über ein oder mehrere Temperatursensoren, mit denen z.B. die Umgebungstemperatur und die Substratoberflächentemperatur aufgenommen werden können.

In der einfachsten Ausführungsform sind als Abdeckelemente jeweils ein oder mehrere Platten vorgesehen, die einfach über und/oder unter der Kühlstrecke verschiebbar befestigt werden können, bevorzugt verwendet man jedoch Rolladenkästen mit ein- und ausfahrbaren Rolläden als Abdeckelemente.

In einer besonders günstigen Ausführungsform sind aus den Rolladenkästen beidseitig Rolläden ein- und ausfahrbar, die Ein- und Ausfahrrichtung der Rolläden sollte entlang der Förderrichtung liegen. Vorteilhafterweise sind die Rolladenkästen auf einem Schienensystem verschiebbar montiert, zusätzlich kann ein elektromotorischer Antrieb zum Verschieben der Kästen vorgesehen sein.

In einer bevorzugten Ausführungsform ist ein Regelsystem zur automatischen Steuerung des Abstands der Abdeckelemente von den Substraten und/oder der Position der Abdeckelemente entlang der Förderrichtung und/oder der durch die Abdeckelemente abgedeckten Fläche nach Maßgabe der von den Temperatursensoren gemessenen Temperaturwerte vorgesehen.

Generell ist es vorteilhaft, durch die Wahl der Beschichtung und/oder des Materials der Abdeckelemente den Grad der Absorption und/oder Reflexion zu beeinflussen. Material und/oder Beschichtung können auch von Element zu Element variiert werden, um eine besonders günstige Abkühlkurve über der Zeit zu erzielen.

Des weiteren kann es zur Einstellung des Grades der Absorption und/oder der Reflexion vorteilhaft sein, Abdeckelemente vorzusehen, die Lamellen aufweisen, deren Neigung gegen die Substrate stufenlos einstellbar ist. Hierdurch kann der durch ein Abdeckelement erreichte Grad der Absorption und/oder der Reflexion zwischen nahezu 0 % und 100 % variiert werden.

Im folgenden werden drei Ausführungsbeispiele der erfindungsgemäßen Vorrichtung anhand von Zeichnungen näher erläutert. Es zeigen:
- Fig. 1: eine erste Ausführungsform einer erfindungsgemäßen Vorrichtung zum Kühlen von platten- oder bahnförmigen Substraten mit einfachen Platten als Abdeckelemente in der Seitenansicht,
- Fig. 2: die Vorrichtung gemäß Fig. 1 in der Draufsicht,
- Fig. 3: eine zweite Ausführungsform der erfindungsgemäßen Vorrichtung zum Kühlen von platten- oder bahnförmigen Substraten mit Rolladenkästen, die aus- und einfahrbare Rolläden enthalten, in der Seitenansicht,
- Fig. 4: die Vorrichtung gemäß Fig. 3 in der Draufsicht,
- Fig. 5: eine dritte Ausführungsform einer erfindungsgemäßen Vorrichtung zum Kühlen von platten- oder bahnförmigen Substraten, in der die Abdeckelemente Lamellen aufweisen, in der Seitenansicht mit geschlossenen Lamellen,
- Fig. 6: die Vorrichtung gemäß Fig. 5 in der Draufsicht,
- Fig. 7: die Vorrichtung gemäß Fig. 5 in der Seitenansicht mit geöffneten Lamellen,
- Fig. 8: die Vorrichtung gemäß Fig. 5 in der Draufsicht mit geöffneten Lamellen, und
- Fig. 9: einen Extruder mit Rollenkühlstrecke gemäß dem Stand der Technik.

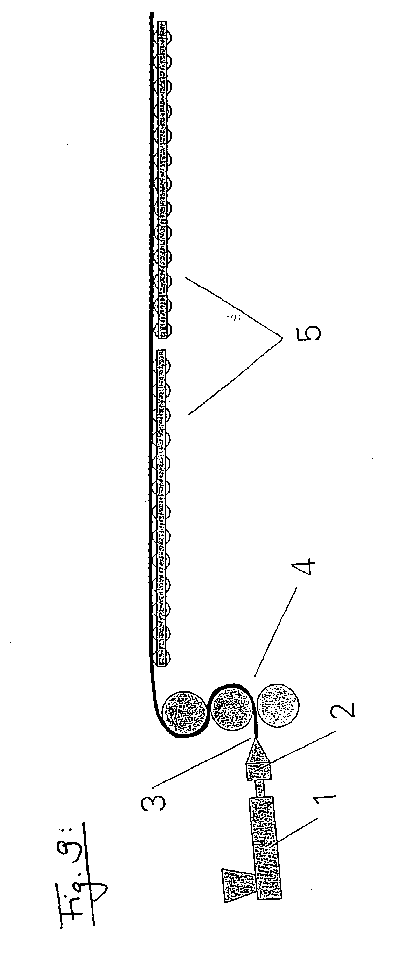

Fig. 9 zeigt den Stand der Technik. Beim Verlassen eines schematisch dargestellten Extruders 1 wird der Schmelzestrang durch eine Breitschlitzdüse 2 zu Kunststoffplatten oder -bahnen 3 ausgeformt. In einem anschließenden Walzenglättwerk 4 werden diese geglättet und auf große Dickengleichmäßigkeit gebracht. Während der nachfolgenden Förderung auf der Rollenkühlstrecke 5 kühlen die Kunststoffplatten oder -bahnen 3 durch Kontakt mit der Umgebungsluft ab.

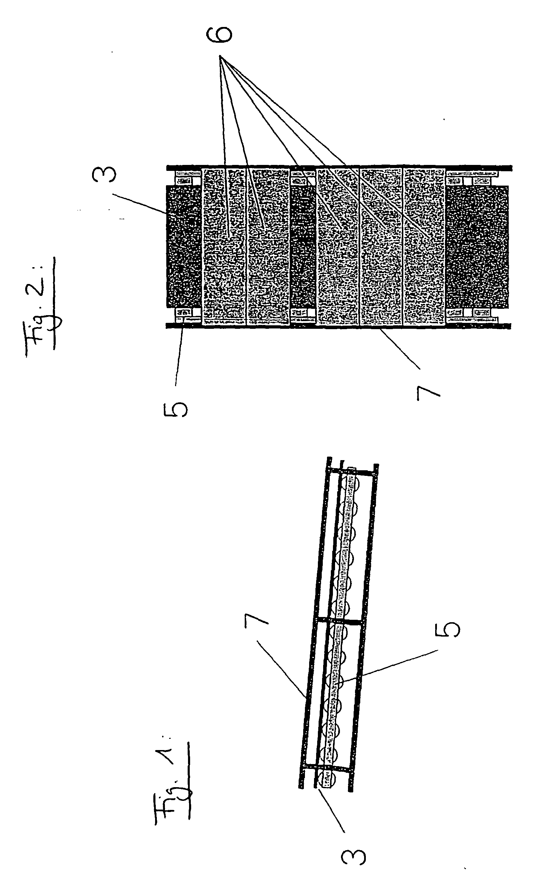

Die erfindungsgemäße Vorrichtung zum Kühlen von Kunststoffplatten oder -bahnen 3, die in Fig. 1 dargestellt ist, besteht aus einer Fördereinrichtung, die als Rollenkühlstrecke 5 ausgebildet ist. Entlang der Rollenkühlstrecke 5 werden die Substrate 3 transportiert und kühlen während der Passage ab. Oberhalb und unterhalb der Rollenkühlstrecke 5 ist eine Haltevorrichtung 7 angebracht, in der einfache Platten als Abdeckelemente positioniert werden können, um den zeitlichen Verlauf der Abkühlung des Substrats zu beeinflussen.

In Fig. 2 wird die Vorrichtung gemäß Fig. 1 in der Draufsicht gezeigt. Es ist gut zu sehen, wie sich durch Hinzufügen bzw. Entfernen von Abdeckplatten 6 die Größe der Bereiche, in denen der Grad der Absorption und/oder der Reflexion beeinflußt wird, verändern läßt. Durch Umgruppieren und/oder Verschieben der einzelnen Abdeckelemente 6 ergeben sich weitere vielfältige Möglichkeiten, das Abkühlverhalten des Substrats 3 einfach und gezielt zu beeinflussen.

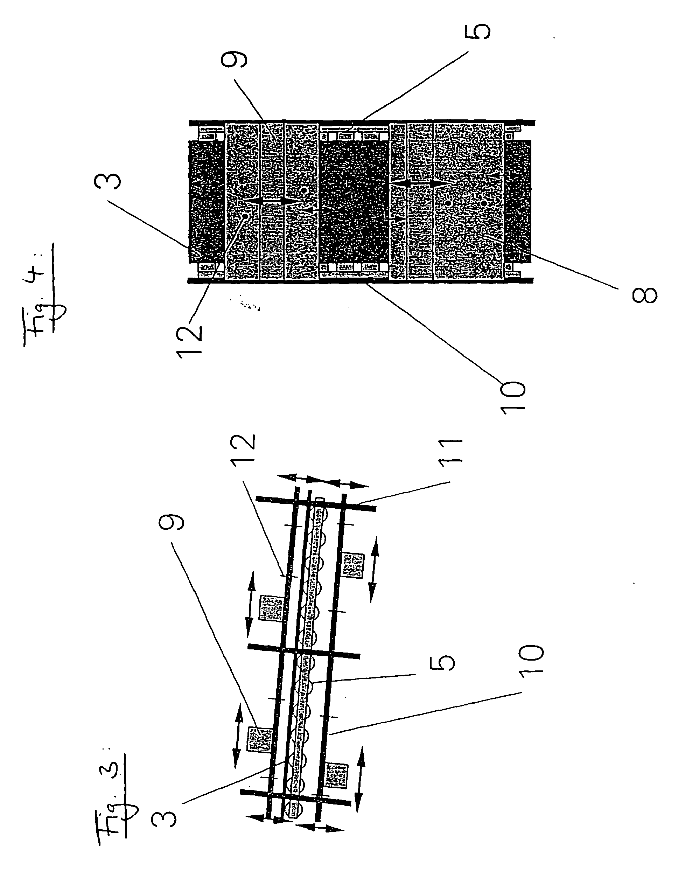

In Fig. 3 ist eine bevorzugte Ausführungsform in der Seitenansicht dargestellt. Wieder ist die Förderstrecke für das Substrat 3 als Rollenkühlstrecke 5 ausgebildet. Rolladenkästen 9 sind oberund unterhalb von der Rollenkühlstrecke 5 auf einem Schienensystem 10 entlang der Förderrichtung verfahrbar angebracht. Der Abstand zwischen Substrat und Schienensystem 10 ist mittels einer Abstandseinstellvorrichtung 11 variabel einstellbar. Temperaturmeßsonden 12 bieten die Möglichkeit, auf Veränderungen von Umgebungs- und/oder Substratoberflächentemperatur flexibel einzugehen.

Wie die Draufsicht in Fig. 4 zeigt, können aus den Rolladenkästen 9 in bezug auf die Förderrichtung beidseitig Rolläden 8 aus- und eingefahren werden. Durch Vergrößern oder Verkleinern der durch die Rolläden 8 abgedeckten Bereiche, durch Ein- bzw. Ausfahren derselben sowie durch Verschieben der Rolladenkästen 9 entlang des Schienensystems 10 und Einstellen des Abstands zwischen Substrat 3 und Rolläden 8 über die Abstandseinstellvorrichtung 11 kann schnell und einfach auf alle Änderungen der Umgebungsbedingungen reagiert werden. Temperaturmeßsonden 12, die an den Rolläden 8 angebracht sind, erleichtern das Überwachen der Umgebungsbedingungen und erlauben es, die Größe und Position der abgedeckten Bereiche entsprechend zu steuern.

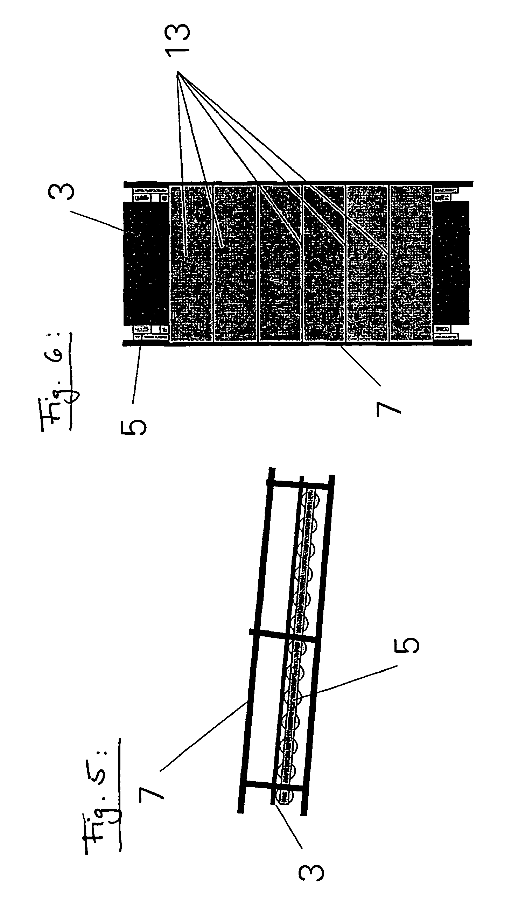

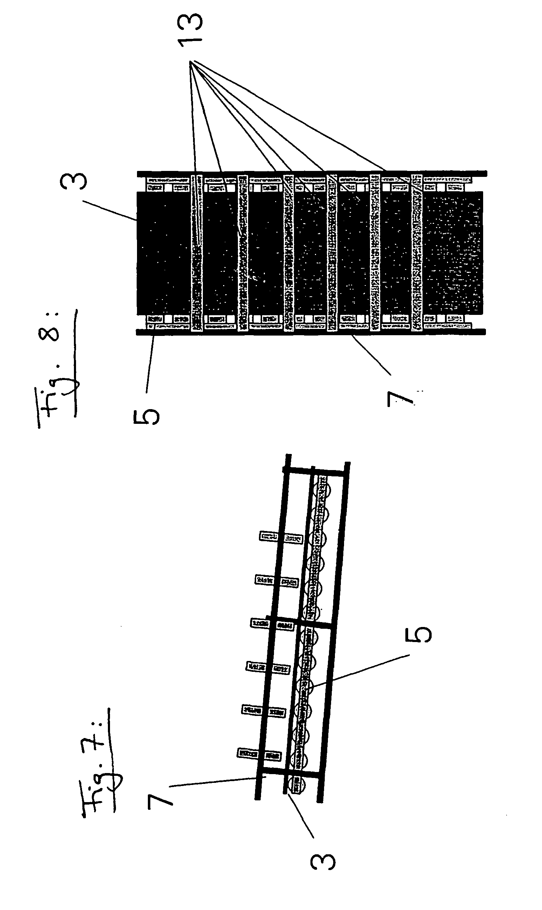

In Fig. 5 - 9 ist eine weitere bevorzugte Ausführungsform der Erfindung dargestellt, in der die Abdeckelemente im wesentlichen aus Lamellen 13 bestehen, und die Größe der Bereiche, in denen der Grad der Absorption und/oder der Reflexion beeinflußt wird, durch das Verändern des Neigungswinkels der Lamellen 13 eingestellt werden kann. In den Fig. 5 und 6 ist diese Vorrichtung bei geschlossenen Lamellen 13 in der Seitenansicht und in der Draufsicht dargestellt, die Fig. 7 und 8 zeigen sie mit maximal geöffneten Lamellen. Es können aber auch beliebige, zwischen diesen Extramalstellungen liegende Neigungswinkel angefahren werden.

Dadurch ist der erzielte Grad der Absorption und/oder der Reflexion sehr flexibel an die tatsächlichen Bedingungen anpassbar. Vorteilhafterweise kann zusätzlich die Anzahl der verwendeten Abdeckelemente an die Erfordernisse angepasst werden.

Die näher dargestellten erfindungsgemäßen Vorrichtungen können zur Durchführung des erfindungsgemäßen Verfahrens eingesetzt werden, es können hierzu aber auch beliebige andere Abdeckelemente verwendet werden, die geeignet sind, den Grad der Absorption und/oder Reflexion in gewissen Bereichen oberhalb und/oder unterhalb von einer Kühlstrecke zu beeinflussen.

### BEZUGSZEICHENLISTE

- 1: Extruder
- 2: Breitschlitzwerkzeug
- 3: Schmelzestrang/Kunststoffbahn
- 4: Glättwerk
- 5: Rollenkühlstrecke
- 6: Platten
- 7: Haltevorrichtung
- 8: Rolladen
- 9: Rolladenkasten
- 10: Schienensystem
- 11: Abstandseinstellvorrichtung
- 12: Temperaturmeßsonde
- 13: Lamellen

## Patentansprüche

1. Verfahren zum Steuern des Abkühlprozesses von platten- oder bahnförmigen Substraten (3), insbesondere Kunststoffplatten oder -bahnen, wobei die Substrate entlang einer Kühlstrecke bewegt werden,
**dadurch gekennzeichnet,**
**dass** die von den Substraten (3) abgestrahlte Wärme mittels oberhalb und/oder unterhalb der Substrate (3) angeordneter Abdeckelemente (6, 9) bereichsweise absorbiert und/oder reflektiert wird, wobei die Bereiche der Absorption und/oder der Reflexion durch die Anordnung und/oder die Anzahl der Abdeckelemente (6, 9) eingestellt werden.

2. Verfahren nach Anspruch 1,
**dadurch gekennzeichnet,**
**dass** der Grad der Absorption und/oder der Reflexion durch Veränderung des Abstandes zwischen den Abdeckelementen (6, 9) und den Substraten (3) eingestellt wird und/oder dass die räumliche Ausdehnung einzelner Bereiche verändert werden kann.

3. Verfahren nach Anspruch 1 oder 2,
**dadurch gekennzeichnet,**
**dass** in den Bereichen der Absorption und/oder der Reflexion die Umgebungs- und/oder die Substratoberflächentemperatur gemessen wird und/oder dass die Ausdehnung der Bereiche und/oder der Grad der Absorption und/oder der Reflexion nach Maßgabe der erfassten Temperaturwerte automatisch geregelt wird bzw. werden.

4. Vorrichtung zum Kühlen von platten- oder bahnförmigen Substraten (3), insbesondere von extrudierten Kunststoffplatten oder -bahnen, mit einer Fördereinrichtung (5), auf der das Substrat (3) während des Förderns abkühlen kann,
**dadurch gekennzeichnet,**
**dass** oberhalb und/oder unterhalb der Fördereinrichtung (5) ein oder mehrere Abdeckelemente (6, 9) zur bereichsweisen Absorption und/oder Reflexion der von den Substraten abgestrahlten Wärme vorgesehen sind, wobei die Bereiche der Absorption und/oder der Reflexion durch die Anordnung und/oder die Anzahl der Abdeckelemente (6, 9) einstellbar sind.

5. Vorrichtung nach Anspruch 4,
**dadurch gekennzeichnet,**
**dass** der Abstand zwischen den Substraten (3) und den Abdeckelementen (6, 9) verstellbar ist und/oder dass die Abdeckelemente (6, 9) entlang der Förderrichtung verschiebbar sind.

6. Vorrichtung nach Anspruch 4 oder 5,
**dadurch gekennzeichnet,**
**dass** die Abdeckung durch Hinzufügen oder Entfernen von Abdeckelementen (6, 9) einstellbar ist und/oder dass ein oder mehrere Abdeckelemente (6, 9) jeweils über ein oder mehrere Temperatursensoren verfügen.

7. Vorrichtung nach einem der Ansprüche 4 bis 6,
**dadurch gekennzeichnet,**
**dass** als Abdeckelemente jeweils eine oder mehrere Platten (6) vorgesehen sind.

8. Vorrichtung nach einem der Ansprüche 4 bis 7,
**dadurch gekennzeichnet,**
**dass** als Abdeckelemente Rollladenkästen (9) mit ein- und ausfahrbaren Rollläden (8) vorgesehen sind und/oder dass Rollladenkästen (9) vorgesehen sind, aus denen beidseitig Rollläden (8) ein- und ausfahrbar sind und/oder dass die Rollläden (8) entlang der Förderrichtung ein- und ausfahrbar sind und/oder dass zum Verschieben der Rollladenkästen ein Schienensystem (10) vorgesehen ist, insbesondere dass ein elektromotorischer Antrieb zum Verschieben der Rollladenkästen vorgesehen ist.

9. Vorrichtung nach einem der Ansprüche 4 bis 8,
**dadurch gekennzeichnet,**
**dass** ein Regelsystem zur automatischen Steuerung des Abstands der Abdeckelemente (6, 9) von den Substraten (3) und/oder der Position der Abdeckelemente (6, 9) entlang der Förderrichtung und/oder der durch die Abdeckelemente abgedeckten Fläche nach Maßgabe der von den Temperatursensoren gemessenen Temperaturwerte vorgesehen ist.

10. Vorrichtung nach einem der Ansprüche 4 bis 9,
**dadurch gekennzeichnet,**
**dass** zur Einstellung des Grades der Absorption und/oder der Reflexion Abdeckelemente (6, 9) aus unterschiedlich stark absorbierendem und/oder unterschiedlich stark reflektierendem Material vorgesehen sind und/oder dass zur Einstellung des Grades der Absorption und/oder der Reflexion Abdeckelemente (6, 9) mit unterschiedlich stark absorbierender und/oder unterschiedlich stark reflektierender Beschichtung auf der den Substraten zugewandten Fläche vorgesehen sind.

11. Vorrichtung nach einem der Ansprüche 4 bis 10,
**dadurch gekennzeichnet,**
**dass** zur Einstellung des zeitlichen Verlaufes der Abkühlung die Abdeckung über die Anzahl und/oder über die Beschichtung und/oder über das Material und/oder über die Reihenfolge der einzelnen Abdeckelemente (6, 9) einstellbar ist und/oder dass zur Einstellung des Grades der Absorption und/oder der Reflexion Abdeckelemente (6, 9) vorgesehen sind, die Lamellen (13) aufweisen, deren Neigung gegen die Substrate (3) regelbar ist.

## Claims

1. A method for controlling the cooling process of slab- or web-shaped substrates (3), in particular plastic slabs or plates, in which the substrates are moved along a cooling path,
**characterized in that**
the heat radiated by the substrates (3) is partially absorbed and/or reflected by means of covering elements (6, 9) arranged above and/or below the substrates (3), the regions of absorption and/or reflection being adjusted by the arrangement and/or the number of the covering elements (6, 9).

2. The method according to Claim 1,
**characterized in that**
the degree of absorption and/or reflection is adjusted by altering the distance between the covering elements (6, 9) and the substrates (3) and/or that the spatial extent of individual regions can be altered.

3. The method according to Claim 1 or 2,
**characterized in that**
in the regions of absorption and/or reflection, the ambient temperature and/or the substrate surface temperature is measured and/or that the extent of the regions and/or the degree of absorption and/or reflection is/are regulated automatically in accordance with the temperature values which are detected.

4. A device for cooling slab- or web-shaped substrates (3), in particular of extruded plastic slabs or webs, with a conveying arrangement (5) on which the substrate (3) can cool during the conveying,
**characterized in that**
above and/or below the conveying arrangement (5) one or more covering elements (6, 9) are provided for the partial absorption and/or reflection of the heat radiated from the substrates, in which the regions for absorption and/or reflection are adjustable by the arrangement and/or number of covering elements (6, 9).

5. The device according to Claim 4,
**characterized in that**
the distance between the substrates (3) and the covering elements (6, 9) is adjustable and/or that the covering elements (6, 9) are displaceable along the conveying direction.

6. The device according to Claim 4 or 5,
**characterized in that**
the covering is adjustable by the addition or removal of covering elements (6, 9) and/or that one or more covering elements (6, 9) respectively have at their disposal one or more temperature sensors.

7. The device according to any of Claims 4 to 6,
**characterized in that**
one or more panels (6) are respectively provided as covering elements.

8. The device according to any of Claims 4 to 7,
**characterized in that**
roller blind boxes (9) with retractable and extendable blinds (8) are provided as covering elements, and/or that roller blind boxes (9) are provided, from which blinds (8) are able to be retracted and extended on both sides and/or that the blinds (8) are able to be retracted and extended along the conveying direction, and/or that a rail system (10) is provided for the displacement of the roller blind boxes, in particular that an electromotive drive is provided to displace the roller blind boxes.

9. The device according to any of Claims 4 to 8,
**characterized in that**
a regulating system is provided for the automatic control of the distance of the covering elements (6, 9) from the substrates (3) and/or the position of the covering elements (6, 9) along the conveying direction and/or the area covered by the covering elements according to the temperature values measured by the temperature sensors.

10. The device according to any of Claims 4 to 9,
**characterized in that**
to adjust the degree of absorption and/or reflection, covering elements (6, 9) are provided which are made from material which absorbs at different intensity and/or reflects at different intensity, and/or that to adjust the degree of absorption and/or reflection, covering elements (6, 9) are provided which have a coating which absorbs at different intensity and/or reflects at different intensity on the surface facing the substrates.

11. The device according to any of Claims 4 to 10,
**characterized in that**
to adjust the chronological course of cooling, the covering is able to be adjusted by the number and/or by the coating and/or by the material and/or by the sequence of the individual covering elements (6, 9) and/or that to adjust the degree of absorption and/or reflection, covering elements (6, 9) are provided which have sheets (13), the inclination of which towards the substrates (3) is able to be regulated.

## Revendications

1. Procédé pour commander le processus de refroidissement de substrats (3) ayant la forme de plaques ou de bandes, notamment de plaques ou de bandes en matière plastique, les substrats étant déplacés le long d'un trajet de refroidissement,
**caractérisé en ce que**,
la chaleur dégagée par les substrats (3) est absorbée et/ou réfléchie par zones, au moyen d'éléments de recouvrement (6, 9) disposés au dessus ou en dessous des substrats (3), les zones de l'absorption et/ou de la réflexion étant réglées par la disposition et/ou par le nombre des éléments de recouvrement, (6, 9).

2. Procédé selon la revendication 1,
**caractérisé en ce que**,
le taux de l'absorption et/ou de la réflexion est réglé par modification de l'écart entre les éléments de recouvrement (6, 9) et les substrats (3) et/ou **en ce que** l'extension physique de zones individuelles peut être modifiée.

3. Procédé selon la revendication 1 ou 2, **caractérisé en ce que**,
dans les zones de l'absorption et/ou de la réflexion, la température ambiante et/ou la température superficielle des substrats est mesurée et/ou **en ce que** l'extension des zones et/ou le taux de l'absorption et/ou de la réflexion est ou sont réglés automatiquement selon les critères des valeurs de température détectées.

4. Dispositif de refroidissement de substrats (3) ayant la forme de plaques ou de bandes, notamment de plaques ou de bandes en matière plastique extrudées, les substrats étant déplacés le long d'un trajet de refroidissement avec un système de transport (5), sur lequel le substrat (3) peut refroidir pendant le transport, **caractérisé en ce que**,
au dessus ou en dessous du système de transport (5), il est prévu un ou plusieurs éléments de recouvrement (6, 9) pour l'absorption et/ou la réflexion par zones de la chaleur dégagée par les substrats, les zones de l'absorption et/ou de la réflexion étant réglables par la disposition et/ou le nombre des éléments de recouvrement (6, 9).

5. Dispositif selon la revendication 4,
**caractérisé en ce que**,
l'écart entre les substrats (3) et les éléments de recouvrement (6, 9) est ajustable et/ou **en ce que** les éléments de recouvrement (6, 9) sont déplaçables le long du système de transport.

6. Dispositif selon la revendication 4 ou 5,
**caractérisé en ce que**,
le recouvrement est réglable par ajout ou par suppression d'éléments de recouvrement (6, 9) et/ou en ce qu'un ou plusieurs éléments de recouvrement (6, 9) disposent chacun d'un ou de plusieurs capteurs de température.

7. Dispositif selon l'une quelconque des revendications 4 à 6,
**caractérisé en ce que**,
chaque fois une ou plusieurs plaques (6) sont prévues en tant qu'éléments de recouvrement.

8. Dispositif selon l'une quelconque des revendications 4 à 7,
**caractérisé en ce que**,
il est prévu en tant qu'éléments de recouvrement des caissons de volets roulants (9) avec des volets roulants (8) susceptibles de rentrer et de sortir et/ou **en ce qu'**il est prévu des caissons de volets roulants (9) à partir desquels bilatéralement, des volets roulants (8) sont susceptibles de rentrer et de sortir et/ou **en ce que** les volets roulants (8) sont susceptibles de rentrer et de sortir le long de la direction de transport et/ou **en ce que** pour le déplacement des caissons de volets roulants, il est prévu un système de coulisses (10), notamment en ce qu'il est prévu un entraînement par moteur électrique, pour le déplacement des caissons de volets roulants.

9. Dispositif selon l'une quelconque des revendications 4 à 8,
**caractérisé en ce que**,
il est prévu un système de réglage pour la commande automatique de l'écart entre les éléments de recouvrement (6, 9) par rapport aux substrats (3) et ou de la position des éléments de recouvrement (6, 9) le long de la direction de transport et/ou de la surface couverte par les éléments de recouvrement, selon les critères des valeurs de température mesurées par les capteurs de température.

10. Dispositif selon l'une quelconque des revendications 4 à 9,
**caractérisé en ce que**,
pour le réglage du taux de l'absorption et/ou de la réflexion, il est prévu des éléments de recouvrement (6, 9) en une matière à absorption plus ou moins forte et/ou à réflexion plus ou moins forte et/ou **en ce que**, pour le réglage du taux de l'absorption et/ou de la réflexion, il est prévu sur la surface qui fait face aux substrats des éléments de recouvrement (6, 9) avec un revêtement à absorption plus ou moins forte et/ou à réflexion plus ou moins forte.

11. Dispositif selon l'une quelconque des revendications 4 à 10,
**caractérisé en ce que**,
pour le réglage de la courbe de refroidissement dans le temps, le recouvrement est réglable en fonction du nombre et/ou en fonction du revêtement et/ou en fonction de la matière et/ou en fonction de la succession des éléments de recouvrement (6, 9) individuels et/ou **en ce que**, pour le réglage du taux de l'absorption et/ou de la réflexion, il est prévu des éléments de recouvrement (6, 9) comportant des lamelles (13) dont l'inclinaison par rapport aux substrats (3) est réglable.
